# FASCICULE DE BREVET EUROPEEN

(11) **EP 3 271 099 B1**
(45) Date de publication et mention de la délivrance du brevet: **05.06.2019**
(21) Numéro de dépôt: 16714486.4
(22) Date de dépôt: 14.03.2016
(51) Int. Cl.: F01D 25/28, B23C 3/34

(54) **OUTILLAGE POUR L'USINAGE D'UNE GORGE D'UN CARTER DE TURBOMACHINE**
MASCHINE ZUR BEARBEITUNG EINER NUT IM GEHÄUSE EINER TURBINENMASCHINE
MACHINE FOR MACHINING A GROOVE IN THE CASING OF A TURBINE ENGINE

(30) Priorité: 18.03.2015 FR 1552226
(43) Date de publication de la demande: 24.01.2018
(73) Titulaire: SAFRAN AIRCRAFT ENGINES, 75015 Paris (FR)
(72) Inventeur: MERY, Laureline, 77550 Moissy-Cramayel (FR); COUE, Kévin, 77550 Moissy-Cramayel (FR); PAIXAO, Adrien, 77550 Moissy-Cramayel (FR)
(74) Mandataire: Robert, Mathias
(86) Numéro de dépôt international: PCT/FR2016/050560
(87) Numéro de publication internationale: WO 2016/146926

(56) Documents cités:
- EP-A1- 1 129 813
- DE-A1- 19 525 310
- US-A- 4 050 335
- US-A1- 2011 083 537

## Description

L'invention concerne un outillage pour l'usinage d'une gorge annulaire d'un carter de turbomachine ainsi qu'un procédé d'usinage d'une telle gorge.

Une turbomachine comporte classiquement un carter intermédiaire comprenant une virole, appelée virole de carter intermédiaire, destinée à réaliser l'interface entre le carter intermédiaire du turboréacteur et des capots d'inverseur de poussée de la nacelle.

Le document US 2011/083537 A1 montre un outillage présentant les caractéristiques du préambule de la revendication 1. Un exemple de virole de carter intermédiaire est décrit par exemple dans le document FR 2 925 120.

La virole de carter intermédiaire comporte une gorge annulaire qui est destinée à recevoir une lèvre annulaire complémentaire appartenant aux capots d'inverseur de poussée. La lèvre s'appuie radialement et/ou axialement contre les faces internes de la gorge.

Pendant le fonctionnement du turboréacteur, la direction et l'amplitude des efforts d'appui varient selon les conditions de fonctionnement du turboréacteur.

Ainsi, par exemple, lorsque le turboréacteur est à l'arrêt, la virole supporte le capot d'inverseur de poussée, la lèvre s'appuie donc radialement vers le bas contre le fond de la gorge.

A l'inverse, lors de l'inversion de poussée, la lèvre s'appuie axialement dans un sens contre une paroi de la gorge et radialement contre le fond de la gorge.

Aussi, le turboréacteur produit des vibrations qui résultent en un déplacement relatif entre la lèvre et la gorge.

Toutes ces contraintes et vibrations génèrent une usure des parois de la gorge. Cette usure est répartie irrégulièrement sur la périphérie de la gorge.

Lorsque cette usure devient supérieure à une limite prédéfinie, qui est de l'ordre de quelques dixièmes de millimètres, la gorge doit être réparée. A défaut de procédé de réparation existant, la virole est remplacée, ce qui impose un démontage complet du moteur, une telle opération étant longue et coûteuse.

L'invention propose un outillage permettant d'usiner les zones usées en vue de leur réparation, directement sous l'aile d'un avion, c'est-à-dire sans démontage du moteur.

A cet effet, l'invention concerne un outillage pour l'usinage d'une gorge annulaire d'un carter de turbomachine, avec les caractéristiques de la revendication 1.

Un tel outillage permet de positionner précisément l'outil d'usinage vis-à-vis de la gorge, grâce aux différents moyens de positionnement, et de pouvoir ensuite usiner précisément chaque zone usée, sans nécessiter de démontage du moteur. Un tel usinage peut ainsi être réalisé par zones et sous l'aile d'un avion. On évite ainsi un démontage complet du moteur ainsi qu'un remplacement complet de la virole de carter intermédiaire. Après usinage des différentes zones usées, une bande anti-usure par exemple peut ensuite être collée sur chaque zone usinée, une telle bande anti-usure étant réalisée à base de résine et comportant des fibres. Une autre solution est par exemple d'appliquer une couche de résine ainsi qu'une solution permettant de lubrifier la zone réparée.

De préférence, les premiers moyens de positionnement comportent une bague micrométrique apte à adapter la position de l'outil d'usinage selon le premier axe, par rotation de la bague. Une telle bague permet un positionnement radial précis de l'outil d'usinage par rapport à la gorge.

Par ailleurs, les deuxièmes moyens de positionnement comportent une table micrométrique comprenant un support mobile selon le second axe par rapport à l'embase, l'outil d'usinage étant monté sur le support mobile. L'utilisation d'une table micrométrique permet un positionnement axial précis de l'outil d'usinage par rapport à la gorge.

Dans ce cas, l'outil d'usinage peut être monté sur le support mobile par l'intermédiaire des premiers moyens de positionnement.

De plus, les troisièmes moyens de positionnement comportent au moins une zone d'appui de l'embase, aptes à venir s'engager et/ou s'appuyer radialement et axialement par complémentarité de forme sur des flancs annulaires, par exemple des flancs radiaux, délimitant la gorge du carter de la turbomachine.

Selon une caractéristique de l'invention, l'outil d'usinage peut être un outil de fraisage.

Les premiers moyens de positionnement peuvent être aptes à positionner radialement l'outil d'usinage par rapport à l'embase avec une tolérance inférieure à 0,05 mm, de préférence inférieure à 0,025 mm, les seconds moyens de positionnement pouvant être aptes à positionner axialement l'outil d'usinage par rapport à l'embase avec une tolérance inférieure à 0,1 mm, de préférence inférieure à 0,05 mm.

En outre, l'outillage comporte des moyens presseurs aptes à maintenir l'embase en appui sur le carter. Une telle caractéristique permet de maintenir le bon positionnement de l'embase, et donc de l'outil d'usinage, par rapport à la gorge.

Dans ce cas, les moyens presseurs peuvent comporter au moins un galet et des moyens de rappel élastiques tendant à maintenir ledit galet sur le carter, en regard de ladite gorge et de l'embase.

L'invention comporte également un procédé d'usinage d'une gorge annulaire d'un carter de turbomachine, par exemple d'un carter intermédiaire de turbomachine, comportant les étapes consistant à :
- identifier une zone usée de ladite gorge,
- monter un outillage selon l'invention sur ledit carter de façon à ce que l'embase soit montée sur ladite gorge par l'intermédiaire des troisièmes moyens de positionnement, au niveau de ladite zone usée,
- usiner au moins une partie de ladite zone usée de la gorge par déplacement de l'outillage le long de ladite zone usée.

L'invention propose ainsi un procédé d'usinage simple permettant d'usiner uniquement les zones usées de la gorge, sans démontage du moteur et directement sous l'aile de l'avion.

De préférence, l'étape de montage de l'outillage sur le carter comporte une étape de positionnement radial et axial de l'outil d'usinage par rapport à ladite gorge, à l'aide des premiers, deuxièmes et troisièmes moyens de positionnement.

Ladite étape de positionnement peut comporter une étape de détermination de la différence de dimension entre la zone usée et une zone saine de la gorge.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une représentation schématique en section axiale partielle d'un turboréacteur d'aéronef,
- la figure 2 est un détail à plus grande échelle du turboréacteur représenté à la figure 1, montrant la liaison entre la partie de révolution de carter et les capots d'inverseur de poussée,
- la figure 3 est une vue en perspective de l'outillage selon l'invention,
- la figure 4 est une vue de face de l'outillage,
- la figure 5 est une vue en perspective de l'outillage et de la virole de carter intermédiaire, l'outillage étant monté au niveau de la gorge de la virole,
- la figure 6 est une vue illustrant une zone usée de la gorge qui est partiellement usinée, l'embase de l'outillage étant montée sur la gorge.

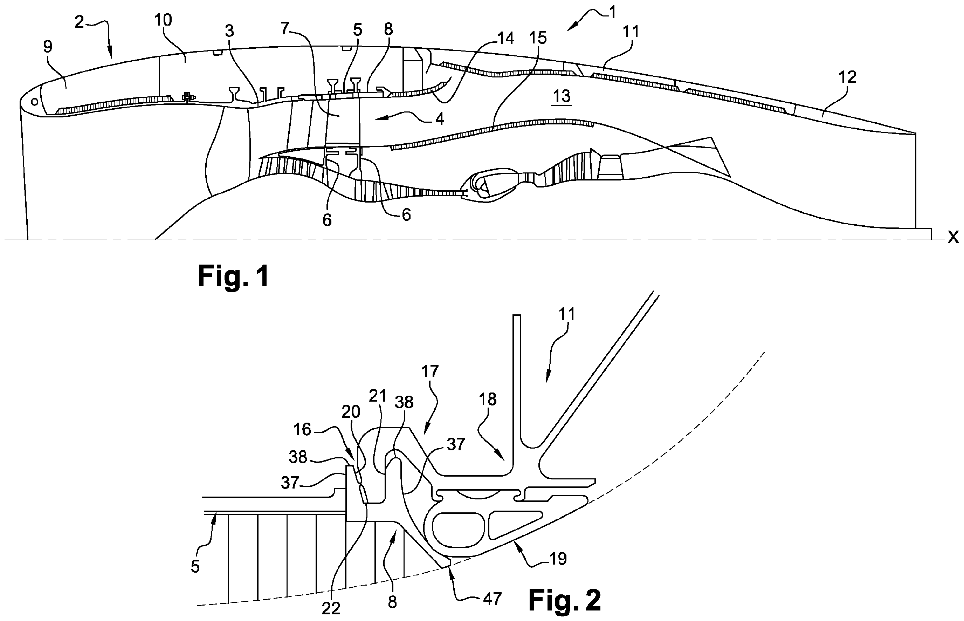

On a représenté à la figure 1, un turboréacteur 1 d'aéronef comportant une nacelle 2, un carter de soufflante 3, prolongé vers l'arrière par un carter intermédiaire 4.

Le carter intermédiaire 4 comprend une virole radialement externe 5 située dans le prolongement aérodynamique arrière du carter de soufflante 3 et des flasques transversaux 6 disposés radialement intérieurement par rapport à cette virole extérieure 5. Le carter intermédiaire 4 comprend en outre des bras structuraux 7 répartis angulairement et s'étendant radialement entre les flasques 6, jusqu'à la virole extérieure 5 avec laquelle ils viennent en contact.

La virole extérieure 5 du carter intermédiaire 4 comporte, dans sa partie aval, une partie de révolution 8, dont le but principal est d'établir une liaison entre la virole extérieure 5 et les capots de nacelle directement adjacents vers l'aval.

La nacelle 2 forme une surface extérieure aérodynamique continue, constituée par une entrée d'air 9, des capots de soufflante 10, des capots d'inverseur de poussée 11, et un capotage arrière fixe 12, ces éléments étant agencés de façon adjacente de l'avant vers l'arrière.

Les capots d'inverseur de poussée 11, généralement au nombre de deux et articulés sur la structure rigide du mât, délimitent de façon connue un canal annulaire de flux secondaire 13, grâce à des peaux annulaires externe 14 et interne 15.

Comme on peut le voir plus en détails à la figure 2, la liaison entre la partie de révolution 8 du carter et les capots 11 d'inverseur de poussée est réalisée par l'intermédiaire d'une gorge annulaire 16 réalisée dans la partie de révolution 8 et d'une lèvre annulaire 17 qui est montée sur une structure porteuse 18 des capots 11, qui est reçue dans la gorge 16.

Cette coopération de la lèvre annulaire 17 avec la gorge 16 permet le maintien axial et radial des capots 11 d'inverseur sur la nacelle 2.

Un joint annulaire 19 est agencé entre la gorge 16 et la lèvre 17 pour empêcher toute circulation d'air au niveau de la jonction entre la partie de révolution 8 et la structure porteuse 18.

La section axiale de la gorge 16 est globalement en forme de U, la gorge 16 comporte ainsi une face avant 20 de révolution, une face arrière 21 de révolution faisant face à la face avant 20 et une face de fond 22 cylindrique reliant les faces avant et arrière 20, 21 à leurs extrémités radiales internes.

La lèvre annulaire 17 est reçue dans la gorge 16 et s'appuie axialement et/ou radialement contre les faces 20, 21, 22 de la gorge 16.

Lors du fonctionnement du turboréacteur 1, les vibrations provoquées par les parties en mouvement provoquent un mouvement de la lèvre 17 dans la gorge 16, et donc une usure progressive des faces 20, 21, 22 de la gorge 16.

Afin de limiter le poids général du turboréacteur, la partie de révolution 8 est réalisée en matériau à base d'aluminium, qui s'use rapidement.

Si l'usure des faces 20, 21, 22 de la gorge 16 est trop prononcée, un jeu important se forme entre la lèvre 17 et la gorge 16.

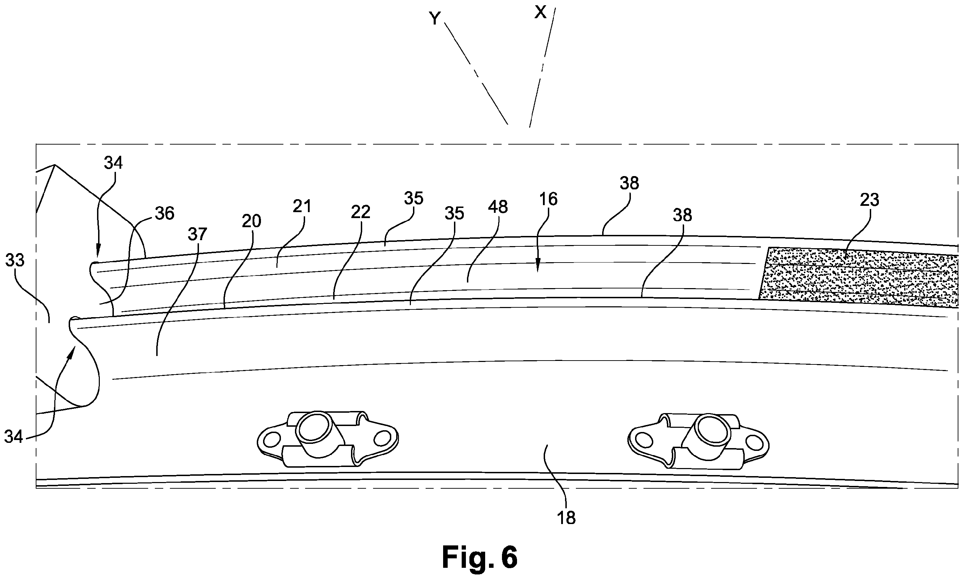

Afin de pouvoir réparer lesdites surfaces 20, 21, 22, il convient tout d'abord d'usiner les zones usées 23 (figure 6) de ces surfaces 20, 21, 22 avant par exemple de coller une bande anti-usure sur chaque zone usinée, une telle bande anti-usure étant réalisée par exemple à base de résine et comportant des fibres. Une autre solution est par exemple d'appliquer sur chaque zone usinée une couche de résine ainsi qu'une solution permettant de lubrifier la zone réparée.

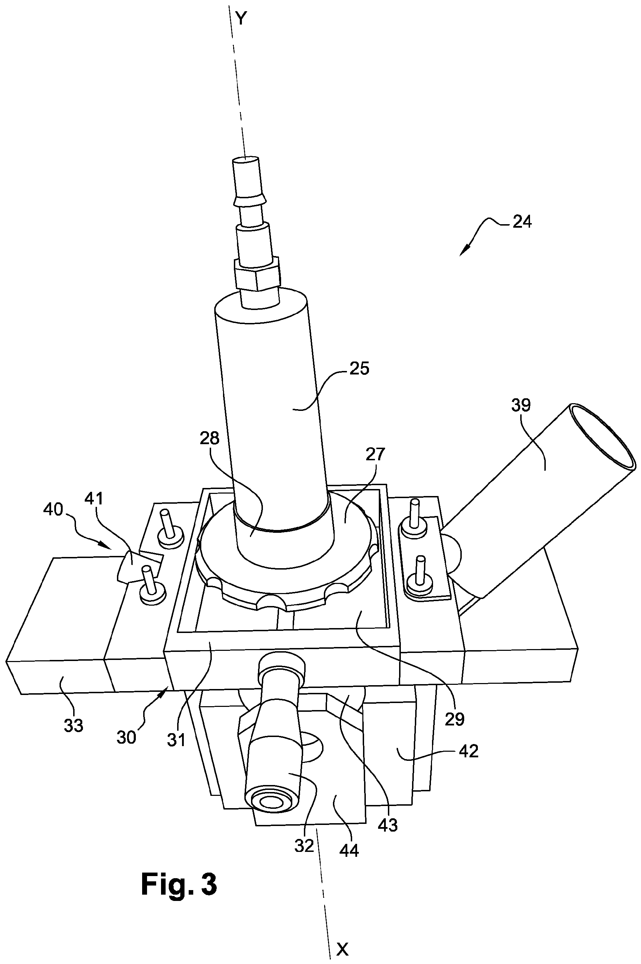

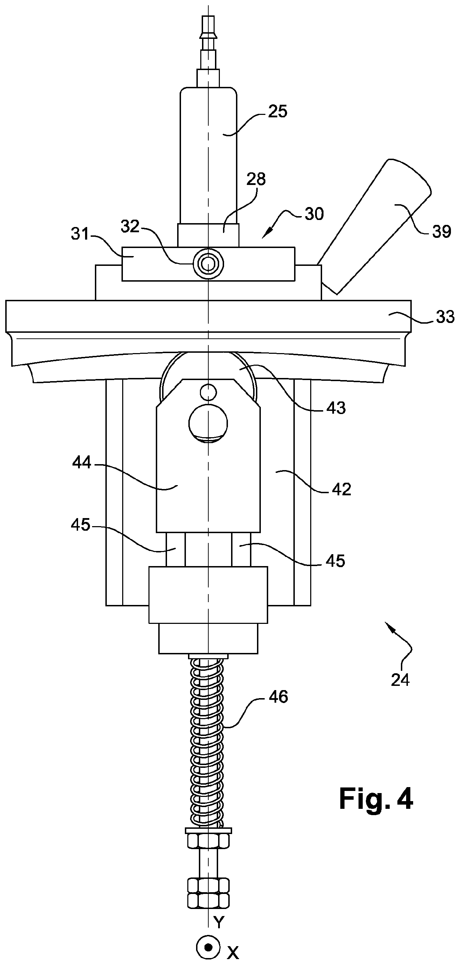

Afin de réaliser l'usinage des différentes zones usées directement sous l'aile d'un avion, c'est-à-dire sans dépose et/ou démontage complet du moteur 1, l'invention propose un outillage 24 représenté aux figures 3 à 6.

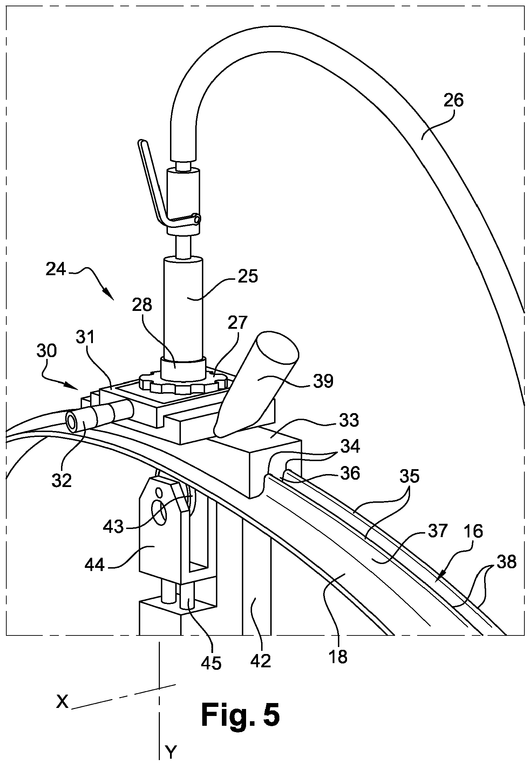

Celui-ci comporte un outil d'usinage 25 se présentant sous la forme d'une fraiseuse dont la fraise tourne autour d'un axe radial Y, perpendiculaire à l'axe longitudinal X de la turbomachine 1. Ladite fraiseuse 25 est par exemple de type pneumatique et est raccordée à une conduite 26 d'alimentation en air comprimé (figure 5).

La partie fixe dudit outil d'usinage 25 est fixée à son extrémité radialement interne sur une platine 27 en forme d'anneau, par l'intermédiaire d'une bague micrométrique 28. La fraise de l'outil d'usinage 25 est donc mobile radialement, dans une certaine mesure, par rapport à la platine 27. Le pivotement de la bague 28 autour de l'axe Y permet d'ajuster la position de la fraise de l'outil d'usinage 25.

La position radiale de la fraise peut être ajustée avec une tolérance inférieure à 0,05 mm, de préférence inférieure à 0,025 mm.

La platine 27 est fixée sur un support 29 d'une table micrométrique 30. Cette dernière comporte en outre un cadre 31, le support 29 étant mobile selon l'axe X par rapport au cadre 31. Le déplacement du support mobile 29 est actionné par une vis micrométrique 32. La position axiale du support 29, et donc de la fraise, peut ainsi être ajustée avec une tolérance inférieure à 0,1 mm, de préférence inférieure à 0,05 mm.

Le cadre 31 est fixé sur la face radialement externe d'une embase 33. Ladite embase 33 comporte en outre deux gorges 34 (figures 5 et 6) s'étendant circonférentiellement, c'est-à-dire perpendiculairement aux axes X et Y, et débouchant radialement vers l'intérieur. Lesdites gorges 34 ont des formes complémentaires aux flancs 35 délimitant la gorge 16 de la virole 5 du carter intermédiaire 4 et délimitent entre elles une partie en saillie 36 destinée à être engagée dans la gorge 16 de la virole 5.

Plus particulièrement, les surfaces desdites gorges 34 sont destinées à prendre appui sur les surfaces 37 des flancs 35, opposées aux surfaces 20, 21 délimitant la gorge 16, et/ou sur les extrémités radialement externes 38 des flancs 35.

Ladite embase 33 est également équipée d'une poignée creuse 39 servant à l'aspiration des copeaux générés lors de l'usinage, raccordée à une conduite d'aspiration non représentée. L'embase 33 est également équipée de moyens de soufflage 40 (figure 3) agencés en regard des moyens d'aspiration 39, de manière à diriger les copeaux vers lesdits moyens d'aspiration 39. Les moyens de soufflage 40 comportent une buse de soufflage raccordée en 41 à une conduite auxiliaire d'alimentation en air comprimé (non représentée).

L'outillage 24 comporte en outre un socle 42 s'étendant radialement, fixé à l'embase 33, un galet 43 étant monté sur ledit socle 42, en regard de l'embase 33, ledit galet 43 étant monté sur une chape 44, elle-même fixée à l'extrémité d'une ou plusieurs tiges mobiles 45, lesdites tiges 45 et le galet 43 étant rappelés radialement vers l'extérieur, c'est-à-dire en direction de l'embase 33, par l'intermédiaire de moyens de rappels élastiques comprenant un ressort hélicoïdal de compression 46.

Afin d'usiner une ou plusieurs zones usées 23, c'est-à-dire un ou plusieurs secteurs angulaires de la gorge 16 de la virole 5 du carter intermédiaire 4, il est procédé comme suit.

Tout d'abord, après ouverture des capots 11 d'inverseur de poussée de la nacelle 2, l'outillage 24 est monté par un opérateur sur la virole 5. En particulier, la partie en saillie 36 de l'embase 33 est engagée dans la gorge 16 de la virole 5 et les flancs 35 sont engagés dans les gorges 34 de l'embase 33.

Le galet 43 est appliqué, par l'intermédiaire du ressort 46, sur la surface radialement interne de la virole 5, en regard de la rainure 16. Les extrémités radialement externes 38 des flancs 35 peuvent alors être en appui sur les fonds des gorges 34 de l'embase 33, immobilisant celle-ci radialement par rapport à la virole 5. Par ailleurs, les surfaces des gorges 34 de l'embase 33 sont en appui sur les surfaces 37 des flancs 35, de sorte que l'embase 33 est également immobilisée axialement par rapport à la virole. En fonction de la forme des surfaces 37 (par exemple forme en congés ou forme tronconique), le positionnement radial et axial peut être réalisé par seul appui des surfaces des gorges 34 sur les surfaces 37 de la virole 5, les extrémités 38 des flancs 35 ne venant alors pas en appui contre le fond des gorges 34.

Afin d'ajuster précisément la position radiale de la fraise, par rapport à une référence non usée et accessible de la virole 5, par exemple la zone référencée 47 à la figure 2, l'opérateur fait pivoter la bague micrométrique 28. Par ailleurs, afin d'ajuster précisément la position axiale de la fraise, par rapport à ladite référence 47 de la virole 5, l'opérateur fait pivoter la vis micrométrique 32 de la table micrométrique 30, de manière à déplacer le support 29.

A cet effet, l'opérateur peut mesurer l'usure de la partie usée à l'aide d'un outil de type comparateur. Pour cela, si la gorge est trop détériorée, alors celle-ci est reconstruite, au moins en partie, à l'aide de pièces métalliques additionnelles, puis l'épaisseur d'une partie saine de la gorge est utilisée en tant que référence pour le comparateur. En d'autres termes, le comparateur est positionné sur une partie saine de la gorge afin de le tarer. Le comparateur est ensuite monté sur une partie usée de la gorge afin de déterminer l'écart d'épaisseur entre la partie saine et la partie usée de la gorge. La position de la fraise est alors adaptée en conséquence.

L'outil de fraisage 25 peut ensuite être démarré et l'outillage 24 peut être déplacé circonférentiellement, à l'aide de la poignée 39, le long de la zone usée 23 de la gorge 16 de la virole 5, de façon à ce que la fraise puisse usiner les zones usées des surfaces 20, 21, 22.

La figure 6 représente une zone usée 23 de la gorge qui a été partiellement usinée. La partie déjà usinée est référencée 48 sur cette figure.

L'invention propose ainsi un outillage 24 et un procédé d'usinage permettant l'usinage des seules zones usées 23 de la gorge 16 de la virole 5, directement sous l'aile de l'avion.

## Revendications

1. Outillage (24) pour l'usinage d'une gorge annulaire (16) d'un carter annulaire (4) de turbomachine (1), ledit outillage (24) comportant un outil d'usinage (25), une embase (33), des premiers moyens de positionnement (28) de l'outil d'usinage (25) par rapport à l'embase (33) selon un premier axe (Y) formant un axe radial, des deuxièmes moyens de positionnement (30) de l'outil d'usinage (25) par rapport à l'embase (33) selon un second axe (X) perpendiculaire au premier axe (Y), ledit second axe (X) s'étendant selon l'axe de la gorge (16) et du carter annulaires, et des troisièmes moyens de positionnement (34), aptes à positionner axialement et radialement l'embase (33) par rapport à la gorge (16, 37) du carter (4), **caractérisé en ce que** lesdits troisièmes moyens de positionnement comportant au moins une zone d'appui (34) de l'embase (33), aptes à venir s'engager et/ou s'appuyer radialement et axialement par complémentarité de forme sur des flancs annulaires, par exemple des flancs radiaux (35), délimitant la gorge (16) du carter (4) de la turbomachine (1), l'outillage comportant en outre des moyens presseurs (42, 43, 44, 45, 46) aptes à maintenir l'embase (33) en appui sur le carter (4).

2. Outillage (24) selon la revendication 1, **caractérisé en ce que** les premiers moyens de positionnement comportent une bague micrométrique (28) apte à adapter la position de l'outil d'usinage (25) selon le premier axe (Y), par rotation de la bague (28).

3. Outillage (24) selon la revendication 1 ou 2, **caractérisé en ce que** les deuxièmes moyens de positionnement comportent une table micrométrique (30) comprenant un support (31) mobile selon le second axe (X) par rapport à l'embase (33), l'outil d'usinage (25) étant monté sur le support mobile (31).

4. Outillage (24) selon la revendication 3, **caractérisé en ce que** l'outil d'usinage (25) est monté sur le support mobile (31) par l'intermédiaire des premiers moyens de positionnement (28).

5. Outillage (24) selon l'une des revendications 1 à 4, **caractérisé en ce que** l'outil d'usinage (25) est un outil de fraisage.

6. Outillage (24) selon l'une des revendications 1 à 5, **caractérisé en ce que** les premiers moyens de positionnement (28) sont aptes à positionner radialement l'outil d'usinage (25) par rapport à l'embase (33) avec une tolérance inférieure à 0,05 mm, de préférence inférieure à 0,025 mm et/ou les seconds moyens de positionnement (30) sont aptes à positionner axialement l'outil d'usinage (25) par rapport à l'embase (33) avec une tolérance inférieure à 0,1 mm, de préférence inférieure à 0,05 mm.

7. Outillage (24) selon l'une des revendications 1 à 6, **caractérisé en ce que** les moyens presseurs comportent au moins un galet (43) et des moyens de rappel élastiques (46) tendant à maintenir ledit galet (43) sur le carter (4), en regard de ladite gorge (16) et de l'embase (33).

8. Procédé d'usinage d'une gorge annulaire (16) d'un carter annulaire (4) de turbomachine (1), par exemple d'un carter intermédiaire (4) de turbomachine (1), comportant les étapes consistant à :
- identifier une zone usée (23) de ladite gorge (16),
- monter un outillage (24) selon l'une des revendications 1 à 7 sur ledit carter (4) de façon à ce que l'embase (33) soit montée sur ladite gorge (16) par l'intermédiaire des troisièmes moyens de positionnement (34, 37), au niveau de ladite zone usée (23), et de façon à ce que les moyens presseurs (42, 43, 44, 45, 46) maintiennent l'embase (33.) en appui sur le carter (4),
- usiner au moins une partie (48) de ladite zone usée (23) de la gorge (16) par déplacement de l'outillage (24) le long de ladite zone usée (23).

9. Procédé selon la revendication 8, **caractérisé en ce que** l'étape de montage de l'outillage (24) sur le carter (4) comporte une étape de positionnement radial et axial de l'outil d'usinage (24) par rapport à ladite gorge (16), à l'aide des premiers, deuxièmes et troisièmes moyens de positionnement.

## Patentansprüche

1. Maschine (24) zum Bearbeiten einer ringförmigen Nut (16) eines ringförmigen Gehäuses (4) von einer Turbomaschine bzw. einem Turbotriebwerk (1), wobei die Maschine (24) ein Bearbeitungswerkzeug (25), eine Basis (33), erste Positioniereinrichtungen (28) zum Positionieren des Bearbeitungswerkzeugs (25) bezüglich der Basis (33) entlang einer ersten Achse (Y), die eine radiale Achse bildet, und zweite Positioniereinrichtungen (30) zum Positionieren des Bearbeitungswerkzeugs (25) bezüglich der Basis (33) entlang einer zweiten Achse (X) senkrecht zur ersten Achse (Y) enthält, wobei die zweite Achse (X) sich entlang der Achse der ringförmigen Nut (16) und des ringförmigen Gehäuses erstreckt, sowie dritte Positioniereinrichtungen (34), die dazu geeignet sind, die Basis (33) bezüglich der Nut (16, 37) des Gehäuses (4) axial und radial zu positionieren,
**dadurch gekennzeichnet, dass**
die dritten Positioniereinrichtungen zumindest einen Abstützbereich (34) zum Abstützen an der Basis (33) enthalten, die dazu geeignet sind, radial und axial formschlüssig in ringförmige Flanken, beispielsweise radiale Flanken (35), einzugreifen und/oder sich daran abzustützen, die die Nut (16) des Gehäuses (4) der Turbomaschine bzw. des Turbotriebwerks (1) begrenzen, wobei die Maschine ferner Andrückeinrichtungen (42, 43, 44, 45, 46) enthält, die dazu geeignet sind, die Basis (33) in Anlage an dem Gehäuse (4) zu halten.

2. Maschine (24) nach Anspruch 1, **dadurch gekennzeichnet, dass** die ersten Positioniereinrichtungen einen mikrometrischen Ring (28) enthalten, der dazu geeignet ist, die Position des Bearbeitungswerkzeugs (25) entlang der ersten Achse (Y) durch Drehung des Rings (28) anzupassen.

3. Maschine (24) nach Anspruch 1 oder 2, **dadurch gekennzeichnet, dass** die zweiten Positioniereinrichtungen einen mikrometrischen Tisch (30) enthalten, der einen entlang der zweiten Achse (X) bezüglich der Basis (33) verstellbaren Träger (31) enthält, wobei das Bearbeitungswerkzeug (25) an den verstellbaren Träger (31) angebracht ist.

4. Maschine (24) nach Anspruch 3, **dadurch gekennzeichnet, dass** das Bearbeitungswerkzeug (25) über die ersten Positioniereinrichtungen (28) an den verstellbaren Träger (31) angebracht ist.

5. Maschine (24) nach einem der Ansprüche 1 bis 4, **dadurch gekennzeichnet, dass** das Bearbeitungswerkzeug (25) ein Fräswerkzeug ist.

6. Maschine (24) nach einem der Ansprüche 1 bis 5, **dadurch gekennzeichnet, dass** die ersten Positioniereinrichtungen (28) dazu geeignet sind, das Bearbeitungswerkzeug (25) bezüglich der Basis (33) mit einer Toleranz von unter 0,05 mm, vorzugsweise von unter 0,025 mm, radial zu positionieren, und/oder dass die zweiten Positioniereinrichtungen (30) dazu geeignet sind, das Bearbeitungswerkzeug (25) bezüglich der Basis (33) mit einer Toleranz von unter 0,1 mm, vorzugsweise von unter 0,05 mm, axial zu positionieren.

7. Maschine (24) nach einem der Ansprüche 1 bis 6, **dadurch gekennzeichnet, dass** die Andrückeinrichtungen zumindest eine Rolle (43) und Federrückstelleinrichtungen (46) enthalten, die dazu neigen, die Rolle (43) der Nut (16) und der Basis (33) gegenüberliegend an dem Gehäuse (4) zu halten.

8. Verfahren zum Bearbeiten einer ringförmigen Nut (16) eines ringförmigen Gehäuses (4) von einer Turbomaschine bzw. einem Turbotriebwerk (1), beispielsweise eines Zwischengehäuses (1) der Turbomaschine bzw. des Turbotriebwerks (1), umfassend die Schritte:
- Identifizieren eines Bearbeitungsbereichs (23) der Nut (16),
- Anbringen einer Maschine (24) nach einem der Ansprüche 1 bis 7 an das Gehäuse (4) derart, dass die Basis (33) über die dritten Positioniereinrichtungen (34, 37) an der Nut (16) in Höhe des Bearbeitungsbereichs (23) angebracht wird, und derart, dass die Andrückeinrichtungen (42, 43, 44, 45, 46) die Basis (33) in Anlage an dem Gehäuse (4) halten,
- Bearbeiten zumindest eines Teils (48) des Bearbeitungsbereichs (23) der Nut (16) durch Verlagern der Maschine (24) entlang des Bearbeitungsbereichs (23).

9. Verfahren nach Anspruch 8, **dadurch gekennzeichnet, dass** der Schritt des Anbringens der Maschine (24) an das Gehäuse (4) einen Schritt des radialen und axialen Positionierens des Bearbeitungswerkzeugs (24) bezüglich der Nut (16) mit Hilfe der ersten, zweiten und dritten Positioniereinrichtungen umfasst.

## Claims

1. Tooling (24) for machining an annular groove (16) of an annular casing (4) of a turbine engine (1), wherein said tooling (24) comprises a machining tool (25), a baseplate (33), first means of positioning (28) the machining tool (25) in relation to the baseplate (33) along a first axis (Y) forming a radial axis, second means of positioning (30) the machining tool (25) in relation to the baseplate (33) along a second axis (X) perpendicular to the first axis (Y), wherein said second axis (X) extends along the axis of the groove (16) and of the annular casing and third means of positioning (34) capable of positioning the baseplate (33) axially and radially in relation to the groove (16, 37) of the casing (4), wherein said third means of positioning comprise at least one bearing area (34) of the baseplate (33) capable of being engaged and/or resting radially and axially in a form-fitting manner on annular sides, for example radial sides (35) delimiting the groove (16) of the casing (4) of the turbine engine (1), wherein the tooling furthermore comprises pressure means (42, 43, 44, 45, 46) capable of holding the baseplate (33) against the casing (4).

2. Tooling (24) according to claim 1, **characterised in that** the first means of positioning comprise a micrometric ring (28) capable of adapting the position of the machining tool (25) along the first axis (Y), by rotating the ring (28).

3. Tooling (24) according to claim 1 or 2, **characterised in that** the second means of positioning comprise a micrometric table (30) comprising a support (31) that is mobile along the second axis (X) in relation to the baseplate (33), wherein the machining tool (25) is mounted on the mobile support (31).

4. Tooling (24) according to claim 3, **characterised in that** the machining tool (25) is mounted on the mobile support (31) via the first means of positioning (28).

5. Tooling (24) according to any of claims 1 to 4, **characterised in that** the machining tool (25) is a milling tool.

6. Tooling (24) according to any of claims 1 to 5, **characterised in that** the first means of positioning (28) are capable of positioning the machining tool (25) radially in relation to the baseplate (33) with a tolerance of less than 0.05 mm, preferably less than 0.025 mm and/or the second means of positioning (30) are capable of positioning the machining tool (25) axially in relation to the baseplate (33) with a tolerance of less than 0.1 mm, preferably less than 0.05 mm.

7. Tooling (24) according to any of claims 1 to 6, **characterised in that** the pressure means comprise at least one roller (43) and elastic return means (46) intending to hold said roller (43) on the casing (4), opposite said groove (16) and the baseplate (33).

8. Method of machining an annular groove (16) of an annular casing (4) of a turbine engine (1), for example of an intermediate casing (4) of a turbine engine (1), comprising the steps involving:
- identifying a worn area (23) of said groove (16),
- installing tooling (24) according to any of claims 1 to 7 on said casing (4) such that the baseplate (33) is mounted on said groove (16) via third means of positioning (34, 37), at the level of said worn area (23) and such that the pressure means (42, 43, 44, 45, 46) hold the baseplate (33) against the casing (4),
- machining at least part (48) of said worn area (23) of the groove (16) by moving the tooling (24) along said worn area (23).

9. Method according to claim 8, **characterised in that** the step of installing the tooling (24) on the casing (4) comprises a step of radial and axial positioning of the machining tool (24) in relation to said groove (16), using the first, second and third means of positioning.
